# EUROPEAN PATENT APPLICATION

(11) **EP 4 148 075 A1**
(43) Date of publication of application: **15.03.2023**
(21) Application number: 20936651.7
(22) Date of filing: 28.10.2020
(51) Int. Cl.: C08F 236/10, C08F 2/06, C08F 297/04, C08F 212/08, C08F 212/36, C08F 2/38, C08F 36/04, C08F 4/08, C08F 4/56

(54) **LIQUID BUTYL BENZENE POLYMER, PREPARATION METHOD FOR SAME AND APPLICATION OF SAME, AS WELL AS COMPOSITION, POLYMER COATING, ADHESIVE, AND CROSS-LINKING AGENT**

(30) Priority: 21.05.2020 CN 202010437131
(71) Applicant: China Petroleum & Chemical Corporation, Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: LI, Jiancheng, Beijing 100013 (CN); XU, Lin, Beijing 100013 (CN); WANG, Xue, Beijing 100013 (CN); SHAO, Mingbo, Beijing 100013 (CN)
(74) Representative: Hoffmann Eitle
(86) International application number: PCT/CN2020/124453
(87) International publication number: WO 2021/232679

(57) **Abstract**

A liquid butyl benzene polymer, a preparation method for same and an application of same, as well as a composition, a polymer coating, an adhesive and a cross-linking agent containing the same. When the total weight of the liquid butyl benzene polymer is taken as a reference, in the liquid butyl benzene polymer, the content of a styrene structural unit is 15-30 wt%, the content of a butadiene structural unit is 70-85 wt%, and the content of a 1,2-structural unit is 60-80 wt%; when the total weight of the 1,2-structural unit in the liquid butyl benzene polymer is taken as a reference, the content of a cyclized 1,2-structural unit is 20-60 wt%. A coating formed by the liquid butyl benzene polymer not only has high peel strength for a substrate, but also has improved thermal expansion performance.

## Description

### Cross Reference to Related Applications

This application claims the benefits of Chinese Patent Application 202010437131.1, filed on May 21, 2020, the contents of which are incorporated herein by reference.

### Field of the Invention

The present invention relates to a liquid butadiene-styrene polymer and a preparation method for the same and an application of the same; the present invention also relates to a composition comprising the liquid butadiene-styrene polymer; the present invention further relates to a polymer coating comprising the liquid butadiene-styrene polymer and the composition, an adhesive including the liquid butadiene-styrene polymer and the composition and a cross-linking agent including the liquid butadiene-styrene polymer and the composition.

### Background of the Invention

A liquid butadiene-styrene polymer is a viscous flowable polymer having a number-average molecular weight of 500-10000 and has wide application in resin modifiers, plasticizers, auxiliaries, photographic materials, adhesives, aqueous coatings, electrophoretic coatings, electrically insulating materials, sintering binders, and the like.

According to the microstructure classification, the liquid butadiene-styrene polymer can be classified into a random liquid butadiene-styrene polymer and a block liquid butadiene-styrene polymer.

The liquid butadiene-styrene polymer generally adopts an anionic solution polymerization process, but the adjustment of molecular weight depends heavily on the catalyst usage amount, and when a low-molecular-weight liquid butadiene-styrene polymer is prepared by the anionic solution polymerization process, there are problems of high catalyst usage amount and difficulty in catalyst removal; moreover, the ability of a structure modifier used in the anionic polymerization process to adjust a polymer microstructure is temperature sensitive, and it is difficult to realize the stability and controllability of the microstructure when the low-molecular-weight liquid butadiene-styrene polymer is prepared by the anionic solution polymerization process. In addition, there is a large difference in reactivity ratio of butadiene and styrene, and there is a large technical difficulty in achieving fully random copolymerization of butadiene and styrene to obtain a random liquid butadiene-styrene polymer. However, the content of a 1,2-structural unit, the content of a styrene structural unit, the molecular weight and distribution thereof have a significant impact on the performance of the liquid butadiene-styrene polymer.

The liquid butadiene-styrene polymer has the characteristics of low dielectric constant and small dielectric loss, has good application prospects in the field of communication technology, however, the development of modern communication technologies has placed higher demands on communication materials, and therefore, it is of great significance to solve the technical problems existing during the preparation of the liquid butadiene-styrene polymer and obtain the liquid butadiene-styrene polymer with better performance to meet the rapid development of the communication technology.

### Summary of the Invention

For a technical problem that it is difficult to stably control a microstructure of the liquid butadiene-styrene polymer in a solution polymerization process for a liquid butadiene-styrene polymer, the inventors of the present invention have conducted intensive investigations on an anionic polymerization process for the liquid butadiene-styrene polymer, a polymerization process which can effectively control the microstructure of the liquid butadiene-styrene polymer is developed, and the microstructure of the liquid butadiene-styrene polymer is optimized, thereby obtaining a liquid butadiene-styrene polymer with improved properties, and a coating formed by the liquid butadiene-styrene polymer shows improved thermal expansion performance. On this basis, the present invention is completed.

According to a first aspect of the present invention, the present invention provides a liquid butadiene-styrene polymer, wherein based on the total amount of the liquid butadiene-styrene polymer, in the liquid butadiene-styrene polymer, the content of a styrene structural unit is 15-30 wt%, the content of a butadiene structural unit is 70-85 wt%, and the content of a 1,2-structural unit is 60-80 wt%; and the content of a cyclized 1,2-structural unit is 20-60 wt% based on the total amount of the 1,2-structural unit in the liquid butadiene-styrene polymer.

According to a second aspect of the present invention, the present invention provides a liquid butadiene-styrene polymer, wherein the content of a cyclized 1,2-structural unit is 20-60 wt% based on the total amount of a 1,2-structural unit in the liquid butadiene-styrene polymer, and a coefficient of linear thermal expansion of the liquid butadiene-styrene polymer is (45-80)×10⁻⁶ m/m/°C.

According to a third aspect of the present invention, the present invention provides a preparation method for a liquid butadiene-styrene polymer, including contacting 1,3-butadiene and styrene with a structure modifier and an anionic polymerization initiator in a polymerization solvent under anionic polymerization reaction conditions to obtain a polymerization solution comprising a butadiene-styrene polymer, wherein the contacting is carried out at a temperature of 85-130°C; the structure modifier includes a component A and a component B, wherein the component A is a tertiary amine, the component B is an alkali metal alkoxide, and a molar ratio of the component B to the component A is 0.1-0.5 : 1; and the polymerization solvent includes an aliphatic heterocyclic solvent.

According to a fourth aspect of the present invention, the present invention provides a liquid butadiene-styrene polymer prepared by the method according to the third aspect of the present invention.

According to a fifth aspect of the present invention, the present invention provides a composition, comprising a liquid butadiene-styrene polymer and at least one additive, wherein the liquid butadiene-styrene polymer is the liquid butadiene-styrene polymer according to the first or fourth aspect of the present invention.

According to a sixth aspect of the present invention, the present invention provides a polymer coating, comprising the liquid butadiene-styrene polymer according to the first or fourth aspect of the present invention, or the composition according to the fifth aspect of the present invention.

According to a seventh aspect of the present invention, the present invention provides an adhesive, comprising the liquid butadiene-styrene polymer according to the first or fourth aspect of the present invention, or the composition according to the fifth aspect of the present invention.

According to an eighth aspect of the present invention, the present invention provides a cross-linking agent, comprising the liquid butadiene-styrene polymer according to the first or fourth aspect of the present invention, or the composition according to the fifth aspect of the present invention.

According to a ninth aspect of the present invention, the present invention provides application of the liquid butadiene-styrene polymer according to the first or fourth aspect of the present invention, or the composition according to the fifth aspect of the present invention as a cross-linking agent, an adhesive or an electrically insulating material.

The liquid butadiene-styrene polymer according to the present invention has good properties, and a coating formed by the liquid butadiene-styrene polymer according to the present invention not only has high peel strength for a substrate, but also has improved thermal expansion performance, thus having a broad application prospect in the field of communication technology.

### Detailed Description of the Embodiments

The endpoints and any values of the ranges disclosed herein are not limited to the precise range or value, and these ranges or values should be understood as including values close to these ranges or values. For numerical ranges, the endpoint values of each range, the endpoint values of each range and individual point values, and individual point values may be combined with each other to obtain one or more new numerical ranges, and these numerical ranges should be considered to be specifically disclosed herein.

In the present invention, the term "liquid butadiene-styrene polymer" refers to a butadiene-styrene polymer having fluidity at 25°C under a pressure of 1 atm.

In the present invention, the term "styrene structural unit" refers to a structural unit formed by polymerization of a styrene monomer, and the term "butadiene structural unit" refers to a structural unit formed by polymerization of a butadiene monomer. In the present invention, the content of the styrene structural unit and the content of the butadiene structural unit in the polymer are determined by nuclear magnetic resonance spectroscopy.

In the present invention, the term "1,2-structural unit" refers to a structural unit formed by 1,2-polymerization of 1,3-butadiene, and the content of a 1,2-structural unit may also be referred to as the vinyl content. In the present invention, the content of the 1,2-structural unit in the polymer is determined by nuclear magnetic resonance spectroscopy.

In the present invention, the term "cyclized 1,2-structural unit" means that vinyl in two adjacent 1,2-structural units are bonded to form a five-membered ring, with a specific structure as shown below:

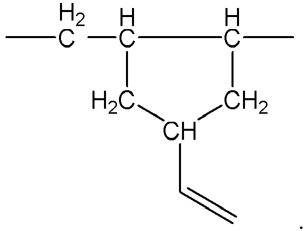

In the present invention, the content of a cyclized 1,2-structural unit in the polymer is determined by nuclear magnetic resonance spectroscopy.

In the present invention, the term "styrene block" means that all structural units in the block are derived from styrene, and the number of structural units in the block is 5 or more. In the present invention, the content of a styrene block in the polymer is determined by nuclear magnetic resonance spectroscopy.

In the present invention, a specific test method of the nuclear magnetic resonance spectroscopy is as follows: a test is performed by using a Bruker AVANCE400 type superconducting nuclear magnetic resonance spectrometer (¹H-NMR), wherein a resonance frequency of ¹H nucleus is 300.13 MHz, a spectral width is 2747.253 Hz, a pulse width is 5.0 µs, a data point is 16 K, a sample tube has a diameter of 5 mm, a solvent is deuterated chloroform (CDCl₃), a sample concentration is 15% (mg/mL), the test temperature is normal temperature (25°C), the number of scans is 16, and calibration is performed with a tetramethylsilane chemical shift being 0 ppm.

In the present invention, the molecular weight and molecular weight distribution index (M_{w}/Mₙ) are determined by using gel permeation chromatography, wherein a specific test method is as follows: a gel permeation chromatograph HLC-8320 from Tosoh Corp is used, a chromatographic column is TSKgel SuperMultiporeHZ-N, a standard column is TSKgel SuperMultiporeHZ, a solvent is chromatographically pure tetrahydrofuran (THF), narrow distribution polystyrene is used as a standard sample, a polymer sample is prepared into a tetrahydrofuran solution at a concentration of 1 mg/mL, an injection volume is 10.00 µL, a flow rate is 0.35 mL/min, and the test temperature is 40.0°C.

In the present invention, the dynamic viscosity of the polymer is determined with reference to the capillary method specified in GBT10247-2008, wherein the dynamic viscosity is determined by using an Ubbelohde viscometer with a size number 5 at a temperature of 45°C.

In the present invention, the content of metal elements in the polymer is determined by a plasma method, and a specific test method is as follows: an Optima 8300 full spectrum direct reading ICP spectrometer from Perkin Elmer (PE), USA, equipped with an echelle grating, a solid state detector, and dual optical path dual solid state detectors in the ultraviolet and visible regions is used, and a flat panel plasma technology is used; and the instrument operating parameters are as follows: a high frequency power of 1300 W, a plasma gasflow of 15 L/min, an atomizing gasflow of 0.55 L/min, an auxiliary gasflow of 0.2 L/min, a peristaltic pump speed of 1.50 mL/min, the integration time of 10 s, and plasma axial observation. A sample preparation method is as follows: 2.000 g of a sample is accurately weighed in a porcelain crucible, the porcelain crucible with the sample is placed in a high temperature resistance furnace and gradually heated to 500°C, after ashing is completed, the ashed material is taken out, 5 mL of 10 vol% diluted nitric acid is added, followed by slowly heating on a hot plate until the ashed material is completely dissolved, the obtained solution is evaporated to dryness, 1 mL of concentrated nitric acid is added, the resulting solution is transferred into a 50 mL volumetric flask, and the volume is made up with water to a constant volume while preparing a reagent blank solution.

In the present invention, the glass transition temperature is determined by differential scanning calorimetry, and a specific test method is as follows: determination is performed by using a TA-2980 DSC differential scanning calorimeter according to the method specified in GB/T 29611-2013, with a heating rate of 20°C/min.

In the present invention, the coefficient of linear thermal expansion is determined by thermomechanical analysis (TMA) according to the method specified in GB/T 36800.2-2018.

According to a first aspect of the present invention, the present invention provides a liquid butadiene-styrene polymer, wherein based on the total amount of the liquid butadiene-styrene polymer, in the liquid butadiene-styrene polymer, the content of a styrene structural unit is 15-30 wt%, the content of a butadiene structural unit is 70-85 wt%, and the content of a 1,2-structural unit is 60-80 wt%; and the content of a cyclized 1,2-structural unit is 20-60 wt% based on the total amount of the 1,2-structural unit in the liquid butadiene-styrene polymer.

According to the liquid butadiene-styrene polymer in the first aspect of the present invention, based on the total amount of the liquid butadiene-styrene polymer, the content of the styrene structural unit in the liquid butadiene-styrene polymer is 15-30 wt%, and may be, for example, 15, 16, 17, 18, 19, 20, 21, 22, 23, 24, 25, 26, 27, 28, 29 or 30 wt%. According to the liquid butadiene-styrene polymer of the present invention, based on the total amount of the liquid butadiene-styrene polymer, in the liquid butadiene-styrene polymer, the content of the styrene structural unit is preferably 18-28 wt%, more preferably 20-26 wt%, and the content of the butadiene structural unit is preferably 72-82 wt%, more preferably 74-80 wt%.

According to the liquid butadiene-styrene polymer in the first aspect of the present invention, based on the total amount of the liquid butadiene-styrene polymer, the content of the 1,2-structural unit is 60-80 wt%, and may be, for example, 60, 61, 62, 63, 64, 65, 66, 67, 68, 69, 70, 71, 72, 73, 74, 75, 76, 77, 78, 79 or 80 wt%. Preferably, the content of the 1,2-structural unit is 65-80 wt% based on the total amount of the liquid butadiene-styrene polymer. More preferably, the content of the 1,2-structural unit is 68-75 wt% based on the total amount of the liquid butadiene-styrene polymer.

According to the liquid butadiene-styrene polymer in the first aspect of the present invention, based on the total amount of the 1,2-structural unit in the liquid butadiene-styrene polymer, the content of the cyclized 1,2-structural unit is 20-60 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 or 60 wt%. Preferably, the content of the cyclized 1,2-structural unit is 25-58 wt% based on the total amount of the liquid butadiene-styrene polymer according to the first aspect of the present invention. More preferably, the content of the cyclized 1,2-structural unit is 30-55 wt% based on the total amount of the liquid butadiene-styrene polymer according to the first aspect of the present invention. Further preferably, the content of the cyclized 1,2-structural unit is 40-50 wt% based on the total amount of the liquid butadiene-styrene polymer according to the first aspect of the present invention. According to the liquid butadiene-styrene polymer in the first aspect of the present invention, a molar ratio of the cyclized 1,2-structural unit to the 1,2-structural unit is preferably 0.4-0.9 : 1, more preferably 0.5-0.7 : 1.

The liquid butadiene-styrene polymer according to the first aspect of the present invention is a random copolymer of 1,3-butadiene and styrene. The liquid butadiene-styrene polymer according to the first aspect of the present invention has a low content of styrene blocks. Generally, in the liquid butadiene-styrene polymer according to the first aspect of the present invention, the content of the styrene block is 0.1 wt% or less, preferably 0.05 wt% or less based on the total weight of the liquid butadiene-styrene polymer.

According to the liquid butadiene-styrene polymer in the first aspect of the present invention, the liquid butadiene-styrene polymer may have a number-average molecular weight (Mₙ) of 2000-7000, preferably 2500-6500, more preferably 3500-4500. The liquid butadiene-styrene polymer according to the first aspect of the present invention not only has a molecular weight suitable for forming, but also has a narrow molecular weight distribution. In general, the liquid butadiene-styrene polymer according to the first aspect of the present invention may have a molecular weight distribution index (M_{w}/Mₙ) of 1-1.15, preferably 1-1.1, more preferably 1-1.09.

According to the liquid butadiene-styrene polymer in the first aspect of the present invention, the dynamic viscosity of the liquid butadiene-styrene polymer at 45°C may be 230-700 Poise (P), preferably 300-600P, more preferably 400-500P.

According to the liquid butadiene-styrene polymer in the first aspect of the present invention, the weight content of metal elements in the liquid butadiene-styrene polymer is 200 ppm or less, preferably 100 ppm or less, more preferably 50 ppm or less, further preferably 20 ppm or less based on the total amount of the liquid butadiene-styrene polymer.

According to the liquid butadiene-styrene polymer in the first aspect of the present invention, the liquid butadiene-styrene polymer has a glass transition temperature (T_{g}) of -40°C to -10°C, preferably -30°C to -15°C.

According to a second aspect of the present invention, the present invention provides a liquid butadiene-styrene polymer, wherein the content of a cyclized 1,2-structural unit is 20-60 wt% based on the total amount of a 1,2-structural unit in the liquid butadiene-styrene polymer, and a coefficient of linear thermal expansion of the liquid butadiene-styrene polymer is (45-80)×10⁻⁶ m/m/°C, preferably (45-75)×10⁻⁶ m/m/°C, more preferably (50-70)×10⁻⁶ m/m/°C, further preferably (55-65)×10⁻⁶ m/m/°C.

According to the liquid butadiene-styrene polymer in the second aspect of the present invention, based on the total amount of the liquid butadiene-styrene polymer, the content of a styrene structural unit in the liquid butadiene-styrene polymer is 15-30 wt%, and may be, for example, 15, 16, 17, 18, 19, 20, 21, 22, 23, 24, 25, 26, 27, 28, 29 or 30 wt%. According to the liquid butadiene-styrene polymer of the present invention, based on the total amount of the liquid butadiene-styrene polymer, in the liquid butadiene-styrene polymer, the content of the styrene structural unit is preferably 18-28 wt%, more preferably 20-26 wt%, and the content of the butadiene structural unit is preferably 72-82 wt%, more preferably 74-80 wt%.

According to the liquid butadiene-styrene polymer in the second aspect of the present invention, based on the total amount of the liquid butadiene-styrene polymer, the content of the 1,2-structural unit is 60-80 wt%, and may be, for example, 60, 61, 62, 63, 64, 65, 66, 67, 68, 69, 70, 71, 72, 73, 74, 75, 76, 77, 78, 79 or 80 wt%. Preferably, the content of the 1,2-structural unit is 65-80 wt% based on the total amount of the liquid butadiene-styrene polymer. More preferably, the content of the 1,2-structural unit is 68-75 wt% based on the total amount of the liquid butadiene-styrene polymer.

According to the liquid butadiene-styrene polymer in the second aspect of the present invention, based on the total amount of the 1,2-structural unit in the liquid butadiene-styrene polymer, the content of the cyclized 1,2-structural unit is 20-60 wt%, for example, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59 or 60 wt%. Preferably, the content of the cyclized 1,2-structural unit is 25-58 wt% based on the total amount of the liquid butadiene-styrene polymer according to the second aspect of the present invention. More preferably, the content of the cyclized 1,2-structural unit is 30-55 wt% based on the total amount of the liquid butadiene-styrene polymer according to the second aspect of the present invention. Further preferably, the content of the cyclized 1,2-structural unit is 40-50 wt% based on the total amount of the liquid butadiene-styrene polymer according to the second aspect of the present invention. According to the liquid butadiene-styrene polymer in the second aspect of the present invention, a molar ratio of the cyclized 1,2-structural unit to the 1,2-structural unit is preferably 0.4-0.9 : 1, more preferably 0.5-0.7 : 1.

The liquid butadiene-styrene polymer according to the second aspect of the present invention is a random copolymer of 1,3-butadiene and styrene. The liquid butadiene-styrene polymer according to the second aspect of the present invention has a low content of styrene blocks. Generally, in the liquid butadiene-styrene polymer according to the second aspect of the present invention, the content of the styrene block is 0.1 wt% or less, preferably 0.05 wt% or less based on the total weight of the liquid butadiene-styrene polymer.

According to the liquid butadiene-styrene polymer in the second aspect of the present invention, the liquid butadiene-styrene polymer may have a number-average molecular weight (Mₙ) of 2000-7000, preferably 2500-6500, more preferably 3500-4500. The liquid butadiene-styrene polymer according to the second aspect of the present invention not only has a molecular weight suitable for forming, but also has a narrow molecular weight distribution. In general, the liquid butadiene-styrene polymer according to the second aspect of the present invention may have a molecular weight distribution index (M_{w}/Mₙ) of 1-1.15, preferably 1-1.1, more preferably 1-1.09.

According to the liquid butadiene-styrene polymer in the second aspect of the present invention, the dynamic viscosity of the liquid butadiene-styrene polymer at 45°C may be 230-700P, preferably 300-600P, more preferably 400-500P.

According to the liquid butadiene-styrene polymer in the second aspect of the present invention, the weight content of metal elements in the liquid butadiene-styrene polymer is 200 ppm or less, preferably 100 ppm or less, more preferably 50 ppm or less, further preferably 20 ppm or less based on the total amount of the liquid butadiene-styrene polymer.

According to the liquid butadiene-styrene polymer in the second aspect of the present invention, the liquid butadiene-styrene polymer has a glass transition temperature (T_{g}) of -40°C to -10°C, preferably -30°C to -15°C.

According to a third aspect of the present invention, the present invention provides a preparation method for a liquid butadiene-styrene polymer, comprising contacting 1,3-butadiene and styrene with a structure modifier and an anionic polymerization initiator in a polymerization solvent under anionic polymerization reaction conditions to obtain a polymerization solution comprising a butadiene-styrene polymer, wherein the contacting is carried out at a temperature of 85-130°C; the structure modifier includes a component A and a component B, wherein the component A is one or two or more selected form tertiary amines, the component B is one or two or more selected form alkali metal alkoxides, and a molar ratio of the component B to the component A is 0.1-0.5 : 1; and the polymerization solvent comprises an aliphatic heterocyclic solvent.

In one preferred embodiment, the component A is one or two or more selected from compounds shown in a formula I.

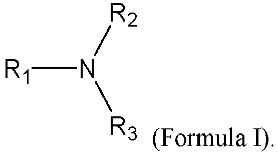

In the formula I, R₂ and R₃ are the same or different, and are each independently C₁-C₆ alkyl.

In the formula I, R₁ is a monovalent group shown in a formula II,

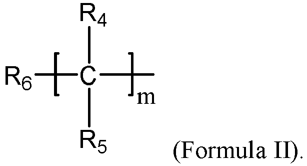

In the formula II, m is an integer of 1-5, and may be, for example, 1, 2, 3, 4, or 5.

In the formula II, R₄ and R₅ are the same or different, and are each independently a hydrogen atom or C₁-C₆ alkyl, preferably the hydrogen atom.

In the formula II, R₆ is -NR₇R₈, or C₃-C₆ oxacycloalkyl, wherein R₇ and R₈ are the same or different, and are each independently C₁-C₆ alkyl.

In the formulas I and II, the C₁-C₆ alkyl includes linear C₁-C₆ alkyl and branched C₃-C₆ alkyl, and specific examples of the C₁-C₆ alkyl may include, but are not limited to, methyl, ethyl, n-propyl, isopropyl, n-butyl, sec-butyl, isobutyl, tert-butyl, n-pentyl, isopentyl, tert-pentyl, neopentyl, and n-hexyl.

According to the preparation method in the third aspect of the present invention, in one preferred embodiment, the component A is N,N,N',N'-tetramethylethylenediamine and/or N,N-dimethyltetrahydrofurfurylamine. According to the preparation method in the third aspect of the present invention, in one particularly preferred embodiment, the component A is N,N,N',N'-tetramethylethylenediamine.

In one preferred embodiment, the component B is one or two or more selected from compounds shown in a formula III.

R₉-O-M₁ (Formula III)

In the formula III, R₉ is C₁-C₂₀ alkyl, C₁-C₂₀ alkyl with a heteroatom-containing substituent, or C₆-C₃₀ aryl, and

M₁ is an alkali metal atom and may be, for example, Li, Na or K, preferably Na.

In the formula III, the C₁-C₂₀ alkyl includes linear C₁-C₂₀ alkyl and branched C₃-C₂₀ alkyl, and specific examples of the C₁-C₂₀ alkyl may include, but are not limited to: methyl, ethyl, n-propyl, isopropyl, n-butyl, sec-butyl, isobutyl, tert-butyl, n-pentyl and isomers thereof, n-hexyl and isomers thereof, n-heptyl and isomers thereof, n-octyl and isomers thereof, n-nonyl and isomers thereof, n-decyl and isomers thereof, undecyl and isomers thereof, dodecyl and isomers thereof, tridecyl and isomers thereof, tetradecyl and isomers thereof, pentadecyl and isomers thereof, hexadecyl and isomers thereof, heptadecyl and isomers thereof, octadecyl and isomers thereof, nonadecyl and isomers thereof, and eicosyl and isomers thereof.

In the formula III, the substituent in the C1-C20 alkyl with the heteroatom-containing substituent is preferably heteroatom-containing cycloalkyl, and specific examples of the heteroatom can include, but are not limited to, an oxygen atom, a sulfur atom, or a nitrogen atom. In one preferred embodiment, the heteroatom in the heteroatom-containing substituent is the oxygen atom, and the heteroatom-containing substituent is cycloalkyl containing an oxygen atom, such as an ethylene oxide substituent, a propylene oxide substituent, a tetrahydrofuran substituent, or a pentylene oxide substituent.

In the formula III, specific examples of the C₆-C₃₀ aryl can include, but are not limited to, phenyl, o-tolyl, m-tolyl, p-tolyl, o-ethylphenyl, m-ethylphenyl, p-ethylphenyl, o-tert-butylphenyl, m-tert-butylphenyl, p-tert-butylphenyl, p-dodecylphenyl, 2,4-di-n-butylphenyl, p-n-propylphenyl and 2,4-diethylphenyl.

According to the preparation method in the third aspect of the present invention, the component B is preferably one or two or more of sodium tetrahydrofurfuryl ate, sodium tert-amylate, sodium tert-butoxide, sodium n-hexylate and sodium mentholate.

According to the preparation method in the third aspect of the present invention, the molar ratio of the component B to the component A is 0.1-0.5 : 1, preferably 0.15-0.45 : 1, more preferably 0.2-0.4 : 1.

According to the preparation method in the third aspect of the present invention, the usage amount of the structure modifier can be adjusted according to the usage amount of monomers (i.e. 1,3-butadiene and styrene) and/or the anionic polymerization initiator. The component A may be used in an amount of 0.5-2 mol, preferably 0.7-1.5 mol relative to 1 mol of the anionic polymerization initiator. The component B may be used in an amount of 0.15-0.5 mol, preferably 0.2-0.4 mol relative to 1 mol of the anionic polymerization initiator.

According to the preparation method in the third aspect of the present invention, the anionic polymerization initiator is preferably an organolithium initiator, more preferably an organomonolithium compound, further preferably a compound shown in a formula IV,

R₁₀Li (Formula IV)

in the formula IV, R₁₀ is C₁-C₆ alkyl, C₃-C₁₂ cycloalkyl, C₇-C₁₄ aralkyl, or C₆-C₁₂ aryl.

In the formula IV, the C₁-C₆ alkyl includes linear C₁-C₆ alkyl and branched C₃-C₆ alkyl, and specific examples of the C₁-C₆ alkyl can include, but are not limited to, methyl, ethyl, n-propyl, isopropyl, n-butyl, sec-butyl, isobutyl, tert-butyl, n-pentyl, isopentyl, tert-pentyl, neopentyl, and n-hexyl.

In the formula IV, specific examples of the C₃-C₁₂ cycloalkyl can include, but are not limited to, cyclopropyl, cyclopentyl, cyclohexyl, 4-methylcyclohexyl, 4-ethylcyclohexyl, 4-n-propylcyclohexyl, and 4-n-butylcyclohexyl.

In the formula IV, specific examples of the C₇-C₁₄ aralkyl can include, but are not limited to, phenylmethyl, phenylethyl, phenyl n-propyl, phenyl n-butyl, phenyl tert-butyl, phenylisopropyl, phenyl n-pentyl, and phenyl n-butyl.

In the formula IV, specific examples of the C₆-C₁₂ aryl can include, but are not limited to, phenyl, naphthyl, 4-methylphenyl, and 4-ethylphenyl.

According to the preparation method in the third aspect of the present invention, specific examples of the anionic polymerization initiator may include, but are not limited to, one or two or more of ethyllithium, n-propyllithium, isopropyllithium, n-butyllithium, sec-butyllithium, tert-butyllithium, phenyllithium, 2-naphthyllithium, 4-butylphenyllithium, 4-tolyllithium, cyclohexyllithium, and 4-butylcyclohexyllithium. Preferably, the anionic polymerization initiator is n-butyllithium and/or sec-butyllithium, more preferably, the anionic polymerization initiator is n-butyllithium.

The amount of the anionic polymerization initiator used may be selected according to the expected molecular weight of the liquid butadiene-styrene polymer. Preferably, the anionic polymerization initiator is used in an amount such that the prepared liquid butadiene-styrene polymer has a number-average molecular weight of 2000-7000, preferably 2500-6500, more preferably 3500-4500. Methods for determining the specific usage amount of the anionic polymerization initiator according to the expected polymer molecular weight are well known to those skilled in the art and will not be described in detail herein.

According to the preparation method in the third aspect of the present invention, the polymerization solvent comprises an aliphatic heterocyclic solvent. The term "aliphatic heterocycle" refers to cycloalkane in which at least one carbon atom on the ring is substituted with a heteroatom. The heteroatom in the aliphatic heterocycle may be an oxygen atom, a nitrogen atom or a sulfur atom, preferably the oxygen atom. The polymerization solvent may be one or two or more selected from tetrahydrofuran, cyclopentene oxide, cyclohexene oxide, and 1,4-dioxane. The polymerization solvent may be used alone or in admixture. In one preferred embodiment, the polymerization solvent is the aliphatic heterocyclic solvent, more preferably oxacycloalkane. In one particularly preferred embodiment, the polymerization solvent is tetrahydrofuran.

According to the preparation method in the third aspect of the present invention, the content of the monomers may be 1-20 wt%, preferably 1.5-15 wt%, more preferably 2-10 wt%, further preferably 3-8 wt% based on the total amount of the polymerization solvent and monomers (i.e. 1,3-butadiene and styrene). In the present invention, the content of the monomers refers to the total weight percent content of 1,3-butadiene and styrene determined based on the total amount of the polymerization solvent, 1,3-butadiene and styrene before the polymerization reaction is carried out.

According to the preparation method in the third aspect of the present invention, the anionic polymerization reaction is carried out by contacting 1,3-butadiene and styrene with the structure modifier and the anionic polymerization initiator in the polymerization solvent at a temperature of 85-130°C. Preferably, the anionic polymerization reaction is carried out by contacting 1,3-butadiene and styrene with the structure modifier and the anionic polymerization initiator at a temperature of 85-110°C. More preferably, 1,3-butadiene and styrene are contacted with the structure modifier at a temperature of 88-100°C. Further preferably, 1,3-butadiene and styrene are contacted with the structure modifier at a temperature of 88-95°C.

According to the preparation method in the third aspect of the present invention, the anionic polymerization reaction may be carried out under a pressure of 0.005-1.5 MPa, more preferably under a pressure of 0.1-1 MPa, further preferably under a pressure of 0.2-0.6 MPa. In the present invention, the pressure refers to a gauge pressure. The time of the polymerization reaction may be selected according to the temperature at which the polymerization reaction is carried out and may generally be 10-60 min, preferably 20-40 min.

According to the preparation method in the third aspect of the present invention, the anionic polymerization reaction is carried out in an atmosphere formed by an inactive gas. The inactive gas refers to gas that does not chemically interact with reactants, reaction products, and the solvent under the polymerization conditions, e.g., nitrogen and/or a group zero element gas (e.g., argon).

According to the preparation method in the third aspect of the present invention, the preparation method may further include removing at least part of metal ions from the polymerization reaction mixture to obtain a purified polymerization reaction mixture. The polymerization reaction mixture may be washed to remove at least part of the metal ions.

In one preferred embodiment, a method for removing at least part of metal ions from the polymerization reaction mixture comprises mixing the polymerization reaction mixture with a washing solution, and separating an oil phase from the mixture, wherein the washing solution is water or an aqueous solution containing an acid. In this preferred embodiment, the acid is preferably an inorganic acid, more preferably one or two or more of sulfuric acid, nitric acid, hydrochloric acid and carbonic acid. When the acid is carbonic acid, carbonic acid may be formed by introducing carbon dioxide gas into a mixture of the polymerization reaction mixture and water and/or adding dry ice to the polymerization reaction mixture.

In one more preferred example of this preferred embodiment, the washing solution includes a first washing solution and a second washing solution, the first washing solution is an aqueous solution containing an acid I, the second washing solution is an aqueous solution containing an acid II, the acid I is one or two or more of sulfuric acid, hydrochloric acid, and nitric acid, the acid II is carbonic acid, and the method for removing at least part of metal ions from the polymerization reaction mixture comprises mixing the polymerization reaction mixture with the first washing solution to obtain a first mixture, separating a first oil phase from the first mixture, and removing at least part of the polymerization solvent from the first oil phase to obtain a crude liquid butadiene-styrene polymer product; and mixing the first oil phase with water in the presence of carbon dioxide to obtain a second mixture, separating a second oil phase from the second mixture, and removing at least part of volatile components from the second oil phase to obtain the liquid butadiene-styrene polymer. In this more preferred example, a weight ratio of the first washing solution to the monomers (i.e. 1,3-butadiene and styrene) is preferably 1-5 : 1, more preferably 2-4 : 1, a molar ratio of the acid I in the first washing solution to the anionic polymerization initiator is preferably 0.1-1.5 : 1, more preferably 0.2-1 : 1, and the acid I is based on H⁺; and a weight ratio of the second washing solution to the monomers (i.e. 1,3-butadiene and styrene) is 1-2 : 1, a molar ratio of the acid II in the second washing solution to the anionic polymerization initiator is preferably from 0.1-1.5 : 1, and the acid II is based on H⁺.

The various reagents used in the preparation method according to the third aspect of the present invention are preferably refined prior to use by using conventional methods in the art to remove impurities (particularly moisture) therein. Methods for refining the reagents are well known in the art and will not be described herein.

The preparation method according to the third aspect of the present invention can be carried out by batch polymerization or continuous polymerization, which is not specially limited.

According to a fourth aspect of the present invention, the present invention provides a liquid butadiene-styrene polymer prepared by the method according to the third aspect of the present invention.

The liquid butadiene-styrene polymer prepared by the method according to the third aspect of the present invention not only has a high content of 1,2-structural units, but also has a cyclic structure formed by part of the 1,2-structural units. A coating formed by using a feedstock comprising the liquid butadiene-styrene polymer prepared by the method according to the third aspect of the present invention shows more excellent thermal expansion performance.

According to a fifth aspect of the present invention, the present invention provides a composition, comprising a liquid butadiene-styrene polymer and at least one additive, wherein the liquid butadiene-styrene polymer is the liquid butadiene-styrene polymer according to the first, second or fourth aspect of the present invention.

The additive may be a substance capable of endowing the composition with new properties and/or improving the existing properties of the composition. As one preferred example, the additive includes an antioxidant. The antioxidant may be of a conventional choice, for example, the antioxidant may be a phenolic and/or amine antioxidant. In particular, the antioxidant may be one or two or more of 2-methyl-4,6-bis(octylsulfanylmethyl)phenol, pentaerythritol tetrakis[3-(3,5-di-tert-butyl-4-hydroxyphenyl)propionate] (i.e., an antioxidant 264), tris(2,4-di-tert-butylphenyl) phosphite (i.e., an antioxidant 168), octadecyl 3-(3,5-di-tert-butyl-4-hydroxyphenyl)propionate (i.e., an antioxidant 1076), 2,6-di-tert-butyl-p-cresol, tert-butylcatechol, and 2,2'-methylene-bis(4-methyl-6-tert-butylphenol). The content of the antioxidant may be 0.005-2 parts by weight, preferably 0.01-1 part by weight relative to 100 parts by weight of the liquid butadiene-styrene polymer.

According to a sixth aspect of the present invention, the present invention provides a polymer coating, comprising the liquid butadiene-styrene polymer according to the first, second or fourth aspect of the present invention, or the composition according to the fifth aspect of the present invention.

The polymer coating according to the present invention not only has a higher adhesion to a substrate, but also has a reduced coefficient of thermal expansion, showing improved thermal expansion performance.

According to a seventh aspect of the present invention, the present invention provides an adhesive, including the liquid butadiene-styrene polymer according to the first, second or fourth aspect of the present invention, or the composition according to the fifth aspect of the present invention.

According to an eighth aspect of the present invention, the present invention provides a cross-linking agent, including the liquid butadiene-styrene polymer according to the first, second or fourth aspect of the present invention, or the composition according to the fifth aspect of the present invention.

According to a ninth aspect of the present invention, the present invention provides application of the liquid butadiene-styrene polymer according to the first, second or fourth aspect of the present invention, or the composition according to the fifth aspect of the present invention as a cross-linking agent, an adhesive or an electrically insulating material.

The present invention will be described in detail below with reference to examples without thereby limiting the scope of the present invention.

Where not specifically stated, normal temperature and room temperature both mean 25±3°C.

In the following Examples and Comparative examples, a microstructure of the polymer was determined by using a Bruker AVANCE 400 type superconducting nuclear magnetic resonance spectrometer (¹H-NMR), wherein a resonance frequency of ¹H nucleus was 300.13 MHz, a spectral width was 2747.253 Hz, a pulse width was 5.0 µs, a data point was 16 K, a sample tube has a diameter of 5 mm, a solvent was deuterated chloroform (CDCl₃), the sample concentration was 15% (W/V), the test temperature was normal temperature, the number of scans was 16, and calibration was performed with a tetramethylsilane chemical shift being 0 ppm.

In the following Examples and Comparative examples, the molecular weight and molecular weight distribution index of the polymer were determined by using gel permeation chromatography, wherein the gel permeation chromatography adopted a gel permeation chromatograph HLC-8320 from Tosoh Corp, a chromatographic column was TSKgel SuperMultiporeHZ-N, a standard column was TSKgel SuperMultiporeHZ, a solvent was chromatographically pure tetrahydrofuran (THF), narrow distribution polystyrene was used as a standard sample, a polymer sample was prepared into a tetrahydrofuran solution at a mass concentration of 1 mg/mL, an injection volume was 10.00 µL, a flow rate was 0.35 mL/min, and the test temperature was 40.0°C.

In the following Examples and Comparative examples, the glass transition temperature of the polymer was determined by using a TA-2980 DSC differential scanning calorimeter according to the method specified in GB/T 29611-2013, with a heating rate of 20°C/min.

In the following Examples and Comparative examples, the dynamic viscosity of the polymer at 45°C (viscosity@45°C) was determined with reference to the capillary method specified in GBT10247-2008, wherein the dynamic viscosity was determined by using an Ubbelohde viscometer with a size number of 5 at a temperature of 45°C.

In the following Examples and Comparative examples, the following chemical reagents were involved:
antioxidant 264, antioxidant 168, and antioxidant 1076: purchased from Sinopharm Chemical Reagent Co., Ltd.;
cyclohexane: purchased from Sinopharm Chemical Reagent Co., Ltd., having a purity of greater than 99.9%, soaked for 15 days with a molecular sieve, and having a water content of less than 5 ppm (the weight content);
styrene: polymer grade, purchased from Yanshan petrochemical;
1,3-butadiene: polymer grade, purchased from Yanshan petrochemical;
n-butyllithium: purchased from J&K Chemicals, a 1.6 mol/L solution in hexane;
2,2-di(2-tetrahydrofuryl)propane) (DTHFP): purchased from J&K Chemicals, analytically pure;
ethyl tetrahydrofurfuryl ether (ETE): purchased from J&K Chemicals, analytically pure;
N,N,N',N'-tetramethylethylenediamine (TMEDA): purchased from J&K Chemicals, analytically pure;
sodium tert-amylate (STA): purchased from J&K Chemicals, a 1.4 mol/L solution in tetrahydrofuran;
sodium dodecylbenzenesulfonate (SDBS): purchased from J&K Chemicals, analytically pure, and prepared into a 0.2 mol/L solution in tetrahydrofuran;
sodium tetrahydrofurfurylate (THFOA): purchased from Innochem, a 1.0 mol/L solution in tetrahydrofuran;
sodium mentholate (SMT): purchased from Innochem, a 1.0 mol/L solution in tetrahydrofuran;
N,N-dimethyltetrahydrofurfurylamine (THNN): purchased from J&K Chemicals, analytically pure;
sulfuric acid: purchased from J&K Chemicals, having a concentration of 98% by weight, and prepared into a 20 wt% solution with water; and
nitric acid: purchased from Sinopharm Chemical Reagent Co., Ltd., having a concentration of 68% by weight, and prepared into a 20 wt% solution with water.

### Example 1

This example served to illustrate the liquid butadiene-styrene polymer of the present invention and the preparation method therefor.
(1) Under nitrogen protection, tetrahydrofuran (THF), a structure modifier 1, a structure modifier 2, 1,3-butadiene and styrene (the types and amounts are shown in Table 1, and the amounts listed in Table 1 are all based on pure compounds) were added into a 5L reactor, the temperature within the reactor was controlled to be the polymerization reaction temperature listed in Table 1, and a designed amount of n-butyllithium was added to the reactor (the specific amounts are shown in Table 1, and the amounts listed in Table 1 are all based on pure compounds); and an anionic solution polymerization reaction was carried out at the temperatures and pressures listed in Table 1 to obtain a polymerization reaction mixture comprising a butadiene-styrene polymer.
(2) To the polymerization reaction mixture obtained in the step (1), water and an acid were added (specific amounts and types of acids are listed in Table 2, and the amounts listed in Table 2 are all based on pure compounds), after stirring for 15 min, the stirred material was allowed to stand for layering, an aqueous phase was separated out, and the resulting oil phase was distilled under reduced pressure to obtain a crude liquid butadiene-styrene polymer product.
(3) Water was added into the crude liquid butadiene-styrene polymer product obtained in the step (2), carbon dioxide gas was introduced with stirring (specific amounts of water and carbon dioxide are listed in Table 2), then the mixture was allowed to stand for layering, an aqueous phase was separated out, the resulting oil phase was distilled under reduced pressure, and an antioxidant (specific amounts and types are listed in Table 2) was added to a distillation residue to obtain a composition BS1 including the liquid butadiene-styrene polymer according to the present invention, wherein the structural property parameters of the liquid butadiene-styrene polymer are listed in Table 3.

### Examples 2-13

Examples 2-13 served to illustrate the liquid butadiene-styrene polymer of the present invention and the preparation method therefor.

In Examples 2-13, a liquid butadiene-styrene polymer was prepared by using the same method as that in Example 1, except that in the step (1), the reaction was carried out under the conditions shown in Table 1, and in the step (2) and the step (3), the polymerization reaction mixture comprising the butadiene-styrene polymer obtained in the step (1) was treated under the conditions as shown in Table 2 to obtain respectively compositions BS2-BS13 comprising the liquid butadiene-styrene polymer according to the present invention, wherein the structural property parameters of the liquid butadiene-styrene polymer are listed in Table 3.

### Example 14

This example served to illustrate the liquid butadiene-styrene polymer of the present invention and the preparation method therefor.

A liquid butadiene-styrene polymer was prepared by using the same method as that in Example 1, except that the amount of water used in the step (2) of the preparation method was 80 g, obtaining a composition BS14 comprising the liquid butadiene-styrene polymer according to the present invention, wherein the structural property parameters of the liquid butadiene-styrene polymer are listed in Table 3.

### Example 15

This example served to illustrate the liquid butadiene-styrene polymer of the present invention and the preparation method therefor.

A liquid butadiene-styrene polymer was prepared by using the same method as that in Example 1, except that the amount of sulfuric acid used in the step (2) was 8 mmol, obtaining a composition BS15 comprising the liquid butadiene-styrene polymer according to the present invention, wherein the structural property parameters of the liquid butadiene-styrene polymer are listed in Table 3.

### Example 16

This example served to illustrate the liquid butadiene-styrene polymer of the present invention and the preparation method therefor.

A liquid butadiene-styrene polymer was prepared by using the same method as that in Example 1, except that the step (3) was not carried out, obtaining a composition BS16 comprising the liquid butadiene-styrene polymer according to the present invention, wherein the structural property parameters of the liquid butadiene-styrene polymer are listed in Table 3.

### Example 17

This example served to illustrate the liquid butadiene-styrene polymer of the present invention and the preparation method therefor.

A liquid butadiene-styrene polymer was prepared by the same method as that in Example 1, except that the acid used in the step (2) is nitric acid, the molar amount of nitric acid is the same as that of sulfuric acid in Example 1 in terms of H⁺, obtaining a composition BS17 comprising the liquid butadiene-styrene polymer according to the present invention, wherein the structural property parameters of the liquid butadiene-styrene polymer are listed in Table 3.

### Example 18

This example served to illustrate the liquid butadiene-styrene polymer of the present invention and the preparation method therefor.

A liquid butadiene-styrene polymer was prepared by using the same method as that in Example 1, except that in the step (1), the polymerization reaction was carried out at 85°C, obtaining a composition BS18 comprising the liquid butadiene-styrene polymer according to the present invention, wherein the structural property parameters of the liquid butadiene-styrene polymer are listed in Table 3.

### Comparative example 1

A liquid butadiene-styrene polymer was prepared by the same method as that in Example 1, except that the polymerization temperature in the step (1) was 40°C, obtaining a composition DBS1 comprising the liquid butadiene-styrene polymer, wherein the structural property parameters of the liquid butadiene-styrene polymer are listed in Table 3.

### Comparative example 2

A liquid butadiene-styrene polymer was prepared by using the same method as that in Example 1, except that TMEDA was not added in the step (1), obtaining a composition DBS2 comprising the liquid butadiene-styrene polymer, wherein the structural property parameters of the liquid butadiene-styrene polymer are listed in Table 3.

### Comparative example 3

A liquid butadiene-styrene polymer was prepared by the same method as that in Example 1, except that sodium tetrahydrofurfurylate was not added in the step (1), obtaining a composition DBS3 comprising the liquid butadiene-styrene polymer, wherein the structural property parameters of the liquid butadiene-styrene polymer are listed in Table 3.

### Comparative example 4

A liquid butadiene-styrene polymer was prepared by using the same method as that in Example 1, except that in the step (1), tetrahydrofuran was replaced with an equal amount of cyclohexane, obtaining a composition DBS4 comprising the liquid butadiene-styrene polymer, wherein the structural property parameters of the liquid butadiene-styrene polymer are listed in Table 3.

### Comparative example 5

A liquid butadiene-styrene polymer was prepared by using the same method as that in Example 1, except that in the step (1), an equal amount of cyclohexane was used instead of THF as a solvent and an equal amount of DTHFP was used instead of TMEDA, obtaining a composition DBS5 comprising the liquid butadiene-styrene polymer, wherein the structural property parameters of the liquid butadiene-styrene polymer are listed in Table 3.

### Comparative example 6

A liquid butadiene-styrene polymer was prepared by using the same method as that in Example 1, except that in the step (1), an equal amount of cyclohexane was used instead of THF as a solvent, an equal amount of DTHFP was used instead of TMEDA, and THFOA was not added, obtaining a composition DBS6 comprising the liquid butadiene-styrene polymer, wherein the structural property parameters of the liquid butadiene-styrene polymer are listed in Table 3.

### Comparative example 7

A liquid butadiene-styrene polymer was prepared by using the same method as that in Example 1, except that in the step (1), an equal amount of cyclohexane was used instead of THF as a solvent, an equal amount of DTHFP was used instead of TMEDA, THFOA was not added, and the polymerization temperature was 20°C, obtaining a composition DBS7 comprising the liquid butadiene-styrene polymer, wherein the structural property parameters of the liquid butadiene-styrene polymer are listed in Table 3.

### Comparative example 8

A liquid butadiene-styrene polymer was prepared by using the same method as that in Example 1, except that in the step (1), an equal amount of cyclohexane was used instead of THF as a solvent, an equal amount of ETE was used instead of TMEDA, and an equal amount of SDBS was used instead of THFOA, obtaining a composition DBS8 comprising the liquid butadiene-styrene polymer, wherein the structural property parameters of the liquid butadiene-styrene polymer are listed in Table 3.

### Comparative example 9

A liquid butadiene-styrene polymer was prepared by the same method as that in Example 1, except that in the step (1), TMEDA was not added and the polymerization temperature was 20°C, obtaining a composition DBS9 comprising the liquid butadiene-styrene polymer, wherein the structural property parameters of the liquid butadiene-styrene polymer are listed in Table 3.

### Comparative example 10

A liquid butadiene-styrene polymer was prepared by using the same method as that in Example 1, except that in the step (1) THFOA was used in an amount of 2 mmol, obtaining a composition DBS10 comprising the liquid butadiene-styrene polymer, wherein the structural property parameters of the liquid butadiene-styrene polymer are listed in Table 3.

### Comparative example 11

A liquid butadiene-styrene polymer was prepared by using the same method as that in Example 1, except that in the step (1), an equal amount of cyclohexane was used instead of THF, an equal amount of ETE was used instead of TMEDA, THFOA was not added, and the polymerization temperature was 50°C, obtaining a composition DBS11 comprising the liquid butadiene-styrene polymer, wherein the structural property parameters of the liquid butadiene-styrene polymer are listed in Table 3.

### Comparative example 12

A liquid butadiene-styrene polymer was prepared by using the same method as that in Example 1, except that in the step (1), the polymerization temperature was 70°C, obtaining a composition DBS12 comprising the liquid butadiene-styrene polymer, wherein the structural property parameters of the liquid butadiene-styrene polymer are listed in Table 3.

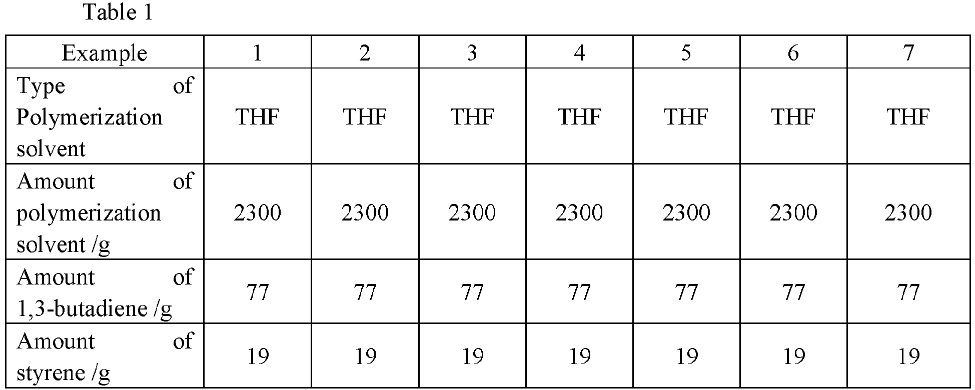

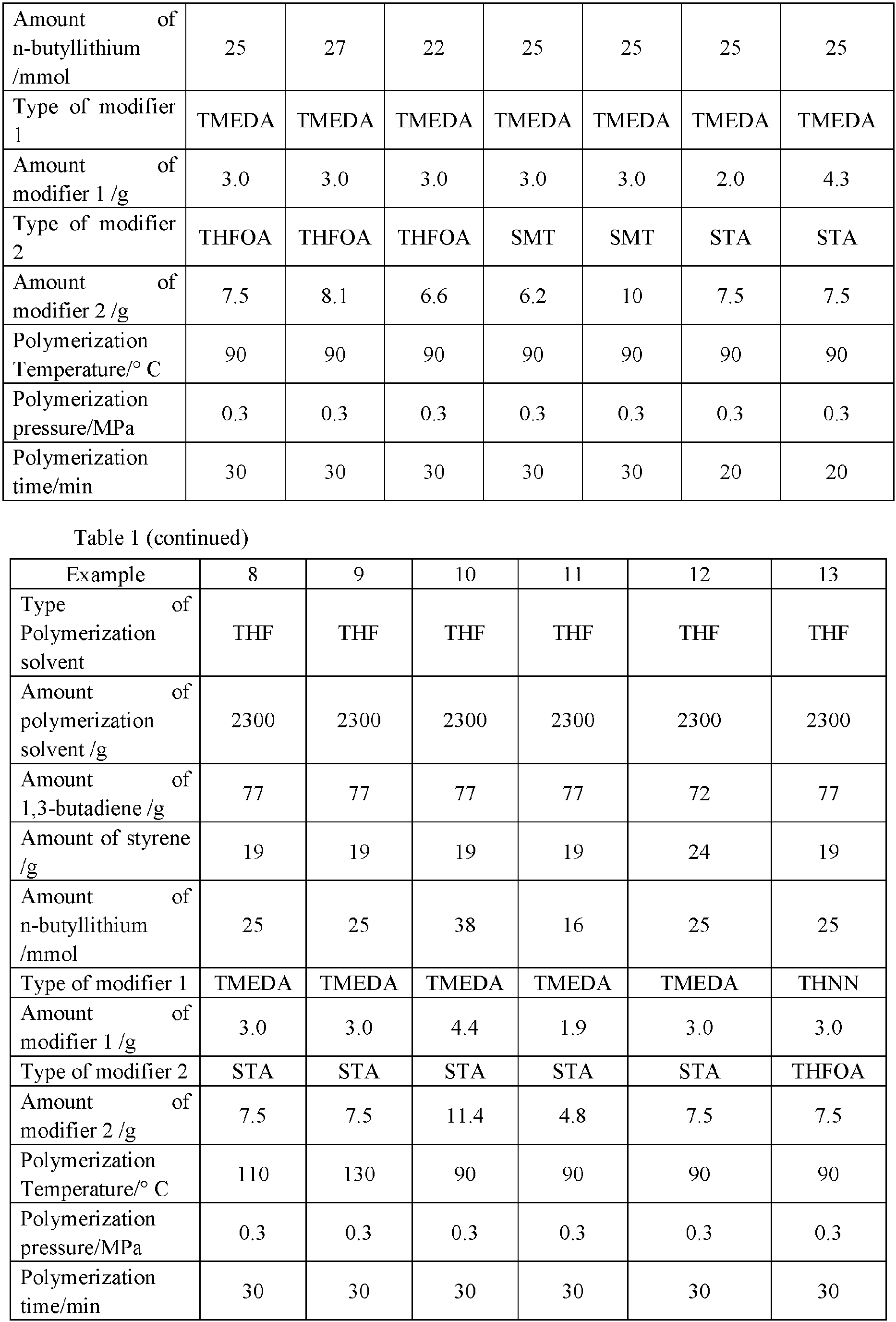

**Table 2**

| Example | Amount of water used in step (2)/g | Amount of acid used in step (2)/mmol | Amount of water used in step (3)/g | Amount of carbon dioxide used in step (3)/mmol | Type of antioxidant | Amount of antioxidant /g |
|---|---|---|---|---|---|---|
| 1 | 200 | Sulfuric acid 15 | 150 | 10 | Antioxidant 264 | 0.04 |
| 2 | 200 | Sulfuric acid 16 | 150 | 11 | Antioxidant 168 | 0.04 |
| 3 | 200 | Sulfuric acid 13 | 150 | 9 | Antioxidant 1076 | 0.04 |
| 4 | 200 | Sulfuric acid 15 | 150 | 10 | Antioxidant 264 | 0.04 |
| 5 | 200 | Sulfuric acid 15 | 150 | 10 | Antioxidant 264 | 0.04 |
| 6 | 200 | Sulfuric acid 15 | 150 | 10 | Antioxidant 264 | 0.04 |
| 7 | 200 | Sulfuric acid 15 | 150 | 10 | Antioxidant 264 | 0.04 |
| 8 | 200 | Sulfuric acid 18 | 150 | 12 | Antioxidant 264 | 0.04 |
| 9 | 200 | Sulfuric acid 12 | 150 | 8 | Antioxidant 264 | 0.04 |
| 10 | 200 | Sulfuric acid 23 | 150 | 15 | Antioxidant 168 | 0.04 |
| 11 | 200 | Sulfuric acid 10 | 150 | 7 | Antioxidant 168 | 0.04 |
| 12 | 200 | Sulfuric acid 15 | 150 | 10 | Antioxidant 264 | 0.04 |
| 13 | 200 | Sulfuric acid 15 | 150 | 10 | Antioxidant 264 | 0.04 |

**Table 3**

| No. | Mₙ | M_{w}/Mₙ | Content of 1,2-structural unit wt% | Content of cyclized 1,2-structural unit wt% | Content of styrene structural unit wt% | Content of styrene block wt% | Viscosity @45°C | Tg °C | Metal weight content ppm |
|---|---|---|---|---|---|---|---|---|---|
| Example 1 | 3896 | 1.06 | 71.3 | 45.2 | 20.1 | 0 | 404 | -22 | 11 |
| Example 2 | 3587 | 1.06 | 70.9 | 44.8 | 20.1 | 0 | 331 | -24 | 13 |
| Example 3 | 4406 | 1.05 | 72.6 | 46.7 | 20.0 | 0 | 438 | -18 | 8 |
| Example 4 | 3902 | 1.03 | 71.1 | 41.3 | 20.1 | 0 | 406 | -23 | 12 |
| Example 5 | 3908 | 1.08 | 72.2 | 48.6 | 20.1 | 0 | 405 | -20 | 14 |
| Example 6 | 3912 | 1.05 | 67.2 | 38.7 | 20.2 | 0 | 407 | -24 | 9 |
| Example 7 | 3882 | 1.07 | 71.5 | 47.4 | 20.1 | 0 | 403 | -22 | 13 |
| Example 8 | 3914 | 1.06 | 65.1 | 48.3 | 20.1 | 0.03 | 407 | -27 | 12 |
| Example 9 | 3942 | 1.07 | 61.2 | 54.2 | 20.0 | 0 | 427 | -32 | 15 |
| Example 10 | 2542 | 1.05 | 70.5 | 43.2 | 20.1 | 0 | 233 | -30 | 17 |
| Example 11 | 6268 | 1.06 | 72.4 | 44.8 | 20.1 | 0 | 674 | -12 | 11 |
| Example 12 | 3896 | 1.06 | 72.6 | 46.3 | 25.2 | 0 | 453 | -22 | 13 |
| Example 13 | 3902 | 1.06 | 70.3 | 33.7 | 20.1 | 0 | 403 | -21 | 9 |
| Example 14 | 3896 | 1.06 | 71.3 | 45.2 | 20.1 | 0 | 404 | -22 | 67 |
| Example 15 | 3896 | 1.06 | 71.3 | 45.2 | 20.1 | 0 | 404 | -22 | 64 |
| Example 16 | 3896 | 1.06 | 71.3 | 45.2 | 20.1 | 0 | 404 | -22 | 114 |
| Example 17 | 3896 | 1.06 | 71.3 | 45.2 | 20.1 | 0 | 404 | -22 | 18 |
| Example 18 | 3884 | 1.06 | 72.1 | 39.8 | 20.0 | 0 | 402 | -21 | 17 |
| Comparative example 1 | 3886 | 1.05 | 78.1 | 15.3 | 20.1 | 0 | 397 | -15 | 14 |
| Comparative example 2 | 3874 | 1.06 | 68.4 | 12.4 | 20.1 | 0.04 | 402 | -25 | 13 |
| Comparative example 3 | 3882 | 1.12 | 59.2 | 10.7 | 20.1 | 0.2 | 418 | -35 | 16 |
| Comparative example 4 | 3927 | 1.16 | 67.4 | 16.8 | 20.2 | 0.03 | 401 | -25 | 18 |
| Comparative example 5 | 3914 | 1.02 | 64.2 | 5.7 | 20.1 | 0.1 | 399 | -28 | 17 |
| Comparative example 6 | 3874 | 1.03 | 63.8 | 0 | 20.1 | 0.4 | 396 | -28 | 19 |
| Comparative example 7 | 3886 | 1.04 | 72.4 | 0 | 20.0 | 0.1 | 402 | -22 | 21 |
| Comparative example 8 | 3892 | 1.04 | 58.7 | 0 | 20.2 | 0.4 | 399 | -36 | 24 |
| Comparative example 9 | 3884 | 1.06 | 73.8 | 4.6 | 20.0 | 0 | 402 | -20 | 26 |
| Comparative example 10 | 3914 | 1.09 | 63.7 | 17.4 | 20.1 | 0 | 398 | -29 | 21 |
| Comparative example 11 | 3902 | 1.03 | 68.3 | 0 | 20.1 | 0.2 | 401 | -23 | 24 |
| Comparative example 12 | 3892 | 1.06 | 75.2 | 18.3 | 20.0 | 0 | 399 | -17 | 19 |

As can be seen from Table 3, the liquid butadiene-styrene polymer according to the present invention not only have a higher content of 1,2-structural units, but also part of the 1,2-structural units form a cyclic structure. At the same time, the liquid butadiene-styrene polymer according to the present invention has a suitable molecular weight and dynamic viscosity and a narrow molecular weight distribution.

### Test example

The compositions BS1 to BS18 prepared in Examples 1-18 uniformly coated a copper foil surface with a coating thickness of 0.8 mm and were cured by crosslinking at 120°C for 2h, the peel strength was determined by using the method specified in IPC-TM-650 2.4.08C, the coefficient of linear thermal expansion was determined by using thermomechanical analysis (TMA) according to the method specified in GB/T 36800.2-2018, and the test results are listed in Table 4.

### Test comparative example

The peel strength and the coefficient of thermal expansion of the compositions DBS1 to DBS12 prepared in Comparative examples 1-12 were determined by using the same method as that in the test example, and the test results are listed in Table 4.

**Table 4**

| Composition No. | Peel strength (N/mm) | Coefficient of linear thermal expansion (10⁻⁶ m/m/°C) |
|---|---|---|
| BS1 | 1.12 | 61.6 |
| BS2 | 1.10 | 62.4 |
| BS3 | 1.14 | 60.8 |
| BS4 | 1.11 | 66.8 |
| BS5 | 1.13 | 59.6 |
| BS6 | 1.06 | 71.2 |
| BS7 | 1.11 | 60.4 |
| BS8 | 1.02 | 64.8 |
| BS9 | 0.86 | 69.6 |
| BS10 | 1.03 | 65.6 |
| BS11 | 1.07 | 63.6 |
| BS12 | 1.14 | 64.4 |
| BS13 | 1.09 | 73.6 |
| BS14 | 1.10 | 62.8 |
| BS15 | 1.12 | 61.6 |
| BS16 | 1.09 | 61.6 |
| BS17 | 1.11 | 62.4 |
| BS18 | 1.11 | 67.6 |
| DBS1 | 1.17 | 97.2 |
| DBS2 | 1.04 | 106.0 |
| DBS3 | 0.79 | 108.8 |
| DBS4 | 1.05 | 101.6 |
| DBS5 | 0.94 | 115.2 |
| DBS6 | 0.92 | 116.4 |
| DBS7 | 1.11 | 114.0 |
| DBS8 | 0.77 | 117.6 |
| DBS9 | 1.14 | 113.2 |
| DBS10 | 0.95 | 99.2 |
| DBS11 | 1.01 | 114.8 |
| DBS12 | 1.14 | 85.2 |

As can be seen from the results of Table 4, the liquid butadiene-styrene polymer according to the second aspect of the present invention exhibits a lower coefficient of thermal expansion while maintaining a higher peel strength.

Preferred embodiments of the present invention are described above in detail, but the present invention is not limited thereto. Within the technical concept range of the present invention, the technical solution of the present invention can be subjected to various simple variations, including the combination of various technical features in any other suitable manner, and these simple variations and combinations should likewise be considered as the contents disclosed by the present invention, and all fall within the protection scope of the present invention.

## Claims

1. A liquid butadiene-styrene polymer, wherein based on the total amount of the liquid butadiene-styrene polymer, in the liquid butadiene-styrene polymer, the content of a styrene structural unit is 15-30 wt%, the content of a butadiene structural unit is 70-85 wt%, and the content of a 1,2-structural unit is 60-80 wt%; and the content of a cyclized 1,2-structural unit is 20-60 wt% based on the total amount of the 1,2-structural unit in the liquid butadiene-styrene polymer.

2. The liquid butadiene-styrene polymer according to claim 1, wherein the content of the cyclized 1,2-structural unit is 30-55 wt%, preferably 40-50 wt% based on the total amount of the 1,2-structural unit in the liquid butadiene-styrene polymer; and
preferably, a weight ratio of the cyclized 1,2-structural unit to the 1,2-structural unit in the liquid butadiene-styrene polymer is 0.4-0.9 : 1, preferably 0.5-0.7 : 1.

3. The liquid butadiene-styrene polymer according to claim 1 or 2, wherein the liquid butadiene-styrene polymer has a number-average molecular weight of 2000-7000, preferably 2500-6500, more preferably 3500-4500; and the liquid butadiene-styrene polymer has a molecular weight distribution index of 1-1.15, preferably 1-1.09.

4. The liquid butadiene-styrene polymer according to any one of claims 1 to 3, wherein the dynamic viscosity of the liquid butadiene-styrene polymer at 45°C is 230-700 P, preferably 300-600 P, more preferably 400-500 P.

5. The liquid butadiene-styrene polymer according to any one of claims 1 to 4, wherein the content of the 1,2-structural unit in the liquid butadiene-styrene polymer is 65-80 wt%, preferably 68-75 wt% based on the total amount of the liquid butadiene-styrene polymer.

6. The liquid butadiene-styrene polymer according to any one of claims 1 to 5, wherein the liquid butadiene-styrene polymer is a random copolymer;
preferably, the content of a styrene block in the liquid butadiene-styrene polymer is 0.1 wt% or
less, preferably 0.05 wt% or less based on the total amount of the liquid butadiene-styrene polymer; and
preferably, the liquid butadiene-styrene polymer has a glass transition temperature of -40°C to -10°C, preferably -30°C to -15°C.

7. A liquid butadiene-styrene polymer, wherein the content of a cyclized 1,2-structural unit is 20-60 wt% based on the total amount of a 1,2-structural unit in the liquid butadiene-styrene polymer, and a coefficient of linear thermal expansion of the liquid butadiene-styrene polymer is (45-80)× 10⁻⁶m/m/°C.

8. The liquid butadiene-styrene polymer according to claim 7, wherein based on the total amount of the liquid butadiene-styrene polymer, in the liquid butadiene-styrene polymer, the content of a styrene structural unit is 15-30 wt%, the content of a butadiene structural unit is 70-85 wt%, and the content of a 1,2-structural unit is 60-80 wt%;
preferably, the content of the cyclized 1,2-structural unit is 30-55 wt%, preferably 40-50 wt% based on the total amount of the 1,2-structural unit in the liquid butadiene-styrene polymer; preferably, a weight ratio of the cyclized 1,2-structural unit to the 1,2-structural unit in the liquid butadiene-styrene polymer is 0.4-0.9 : 1, preferably 0.5-0.7 : 1;
preferably, the liquid butadiene-styrene polymer has a number-average molecular weight of 2000-7000, preferably 2500-6500, more preferably 3500-4500; and the liquid butadiene-styrene polymer has a molecular weight distribution index of 1-1.15, preferably 1-1.09;
preferably, the dynamic viscosity of the liquid butadiene-styrene polymer at 45°C is 230-700P, preferably 300-600P, more preferably 400-500P;
preferably, the content of the 1,2-structural unit in the liquid butadiene-styrene polymer is 65-80 wt%, preferably 68-75 wt% based on the total amount of the liquid butadiene-styrene polymer;
preferably, the liquid butadiene-styrene polymer is a random copolymer;
preferably, the content of a styrene block in the liquid butadiene-styrene polymer is 0.1 wt% or less, preferably 0.05 wt% or less based on the total amount of the liquid butadiene-styrene polymer; and
preferably, the liquid butadiene-styrene polymer has a glass transition temperature of -40°C to -10°C, preferably -30°C to -15°C; and
preferably, a coefficient of linear thermal expansion of the liquid butadiene-styrene polymer is (45-75)×10⁻⁶ m/m/°C, preferably (50-70)×10⁻⁶ m/m/°C, more preferably (55-65)×10⁻⁶ m/m/°C.

9. A preparation method for a liquid butadiene-styrene polymer, comprising contacting 1,3-butadiene and styrene with a structure modifier and an anionic polymerization initiator in a polymerization solvent under anionic polymerization reaction conditions to obtain a polymerization solution comprising a butadiene-styrene polymer, wherein the contacting is carried out at a temperature of 85-130°C; the structure modifier comprises a component A and a component B, wherein the component A is a tertiary amine, the component B is an alkali metal alkoxide, and a molar ratio of the component B to the component A is 0.1-0.5 : 1; and the polymerization solvent comprises an aliphatic heterocyclic solvent.

10. The method according to claim 9, wherein the component A is one or two or more selected from compounds shown in a formula I, 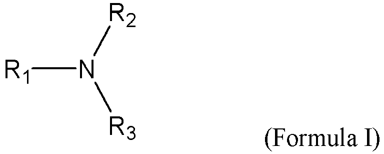 in the formula I, R₂ and R₃ are the same or different, and are each independently C₁-C₆ alkyl, and R₁ is a monovalent group shown in a formula II, 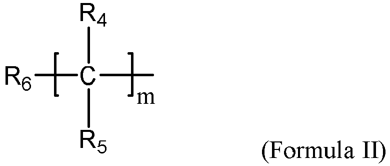 in the formula II, m is an integer of 1-5, R₄ and R₅ are the same or different, and are each independently a hydrogen atom or C₁-C₆ alkyl, and R₆ is -NR₇R₈ or C₃-C₆ oxacycloalkyl, wherein R₇ and R₈ are the same or different, and are each independently C₁-C₆ alkyl, and preferably, the component A is N,N,N',N'-tetramethylethylenediamine and/or N,N-dimethyltetrahydrofurfurylamine.

11. The method according to claim 9 or 10, wherein the component B is one or two or more selected from compounds shown in a formula III,
R₉-O-M₁ (Formula III)
in the formula III, R₉ is C₁-C₂₀ alkyl, C₁-C₂₀ alkyl with a heteroatom-containing substituent, or C₆-C₃₀ aryl, and
M₁ is an alkali metal atom;
preferably, the heteroatom-containing substituent is heteroatom-containing cycloalkyl, and the heteroatom is preferably an oxygen atom, a sulfur atom or a nitrogen atom, more preferably the oxygen atom; and
preferably, the component B is one or more of sodium tetrahydrofurfurylate, sodium tert-amylate, sodium tert-butoxide, sodium n-hexylate and sodium mentholate.

12. The method according to any one of claims 9 to 11, wherein the molar ratio of the component B to the component A is 0.15-0.45 : 1, preferably 0.2-0.4 : 1.

13. The method according to any one of claims 9 to 12, wherein the component B is used in an amount of 0.15-0.5 mol relative to 1 mol of the anionic polymerization initiator.

14. The method according to any one of claims 9 to 13, wherein the contacting is carried out at a temperature of 88-100°C.

15. The method according to any one of claims 9 to 14, wherein the anionic polymerization initiator is used in an amount such that the prepared liquid butadiene-styrene polymer has a number-average molecular weight of 2000-7000, preferably 2500-6500, more preferably 3500-4500;
preferably, the anionic polymerization initiator is an organolithium initiator, preferably one or two or more selected from compounds shown in a formula IV,
R₁₀Li (Formula IV)
in the formula IV, R₁₀ is C₁-C₆ alkyl, C₃-C₁₂ cycloalkyl, C₇-C₁₄ aralkyl, or C₆-C₁₂ aryl; and more preferably, the anionic polymerization initiator is n-butyllithium and/or sec-butyllithium.

16. The method according to any one of claims 9 to 15, wherein the polymerization solvent is tetrahydrofuran.

17. A liquid butadiene-styrene polymer prepared by the method according to any one of claims 9 to 16.

18. A composition, comprising a liquid butadiene-styrene polymer and at least one additive, wherein the liquid butadiene-styrene polymer is the liquid butadiene-styrene polymer according to any one of claims 1 to 8 and 17.

19. The composition according to claim 18, wherein the additive comprises an antioxidant.

20. A polymer coating, comprising the liquid butadiene-styrene polymer according to any one of claims 1 to 8 and 17, or the composition according to any one of claims 18 and 19.

21. An adhesive, comprising the liquid butadiene-styrene polymer according to any one of claims 1 to 8 and 17, or the composition according to any one of claims 18 and 19.

22. A cross-linking agent, comprising the liquid butadiene-styrene polymer according to any one of claims 1 to 8 and 17, or the composition according to any one of claims 18 and 19.

23. Application of the liquid butadiene-styrene polymer according to any one of claims 1 to 8 and 17, or the composition according to any one of claims 18 and 19 as a cross-linking agent, an adhesive or an electrical insulating material.
